# EUROPEAN PATENT APPLICATION

(11) **EP 2 075 482 A1**
(43) Date of publication of application: **01.07.2009**
(21) Application number: 08172586.3
(22) Date of filing: 22.12.2008
(51) Int. Cl.: F16D 65/097, F16D 55/00

(54) **Disk Brake**

(30) Priority: 27.12.2007 JP 2007338097
(71) Applicant: Hitachi Ltd., Chiyoda-ku Tokyo 100-8280 (JP)
(72) Inventor: Sano, Takashi, Kanagawa (JP)
(74) Representative: Schwabe - Sandmair - Marx

(57) **Abstract**

A disk brake comprising: a pair of friction pads (18) disposed to oppose to both surfaces of a disk rotor (D) respectively, and a caliper (1) having a pad insertion space (19) intro which the friction pads can be inserted from radially outside of the disk rotor, wherein at least one of the pair of friction pads is provided with a return spring (65) whose one end abuts against a side of the friction pad opposing to the disk rotor to urge the friction pad to separate from the disk rotor in its axial direction, the one end of the return spring is disposed on the friction pad at intermediate portion in a radial direction of the disk rotor in the pad insertion space of the caliper, and the friction pad is inserted in between the one end of the return spring (76) and a surface of the caliper opposing to the one end.

## Description

### BACKGROUND OF THE INVENTION

### 1. Field of the Invention

The present invention relates to a disk brake.

### 2. Description of the Related Art

There is an opposed type caliper provided with a return spring of a friction pad (see, for example, Japanese Patent Application laid-open No-2002-161931).

According to the above technique, it has been difficult to insert the friction pad.

### SUMMARY OF THE INVENTION

The present invention has been made in light of the above problem, and it is an object of the present invention to provide a disk brake in which a friction pad can easily be inserted.

To achieve the above object, according to the disk brake of the invention, a friction pad is inserted in between one end of a return spring and a surface of a caliper opposing to the one end.

According to the invention, a friction pad can be easily inserted.

### BRIEF DESCRIPTION OF THE DRAWINGS

Fig. 1 is a front view showing a disk brake of a first embodiment of the present invention;
Fig. 2 is a plan view showing the disk brake;
Fig. 3 is a sectional view taken along the line Z-Z in Fig. 2, showing the disk brake;
Figs. 4A to 4C are partially enlarged plan sectional views taken along the line Y-Y in Fig. 3, showing the disk brake, wherein Fig. 4A shows a state before a return spring is assembled, Fig. 4B shows a state after the return spring is assembled and Fig. 4C shows a state alter a friction pad is assembled;
Figs. 5A to 5F are views showing a return spring of the disk brake, wherein Fig. 5A is a front view, Fig. 5B is a plan view, Fig. 5C is a bottom view, Fig. 5D is a side view, Fig. 5E is a side view and Fig. 5F is a back view;
Fig. 6 is a perspective view showing the return spring of the disk brake;
Fig. 7 is a partial enlarged plan sectional view taken along the line Y-Y in Fig. 3, showing the disk brake;
Fig. 8 is a partial enlarged plan sectional view taken along the line Y-Y in Fig. 3, showing a disk brake of a first modification;
Fig. 9 is a front sectional view taken along the line Z-Z in Fig. 2, showing a disk brake of a second modification;
Fig. 10 is a front sectional view taken along the line Z-Z in Fig. 2, showing a disk brake of a third modification;
Fig. 11 is a partial sectional view showing a disk brake of a second embodiment of the present invention;
Fig. 12 is a partial enlarged plan sectional view taken along the line W-W in Fig. 11, showing the disk brake;
Fig. 13 is a partial sectional view showing a modification of the disk brake of a second embodiment of the invention;
Fig. 14 is a partial enlarged plan sectional view taken along the line W-W in Fig. 13, showing the modification;
Fig. 15 is a side view of a return spring of a disk brake of a third embodiment according to the invention;
Fig. 16 is a sectional view showing a disk brake of a fourth embodiment according to the invention;
Fig. 17 is a sectional view showing a disk brake of a fifth embodiment according to the invention; and
Fig. 18 is a partially sectional plan view showing a disk brake of a sixth embodiment according to the invention.

### DETAILED DESCRIPTION OF THE PREFERRED EMBODIMENTS

Each embodiment of the present invention will be described below with reference to the drawing.

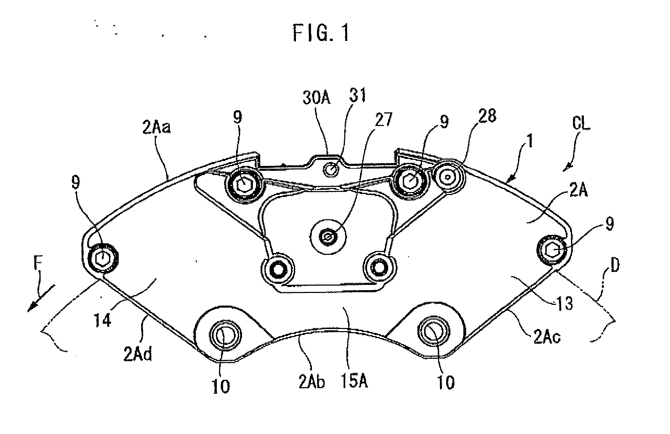

(First Embodiment) A disk brake according to a first embodiment of the present invention will be described referring to Figs. 1 to 10.

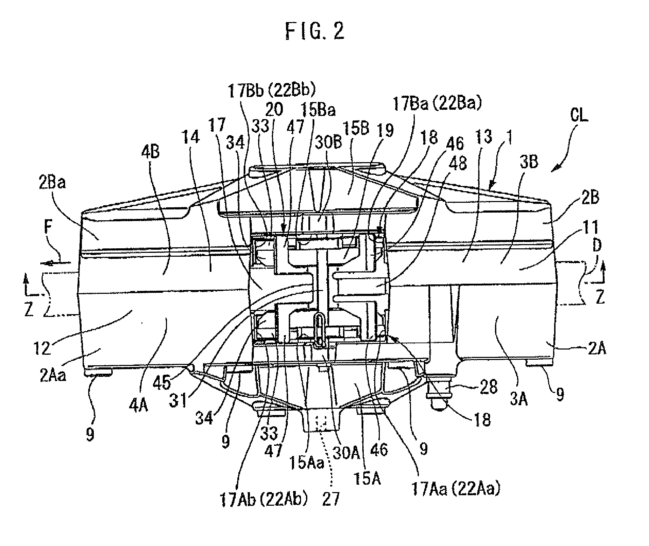

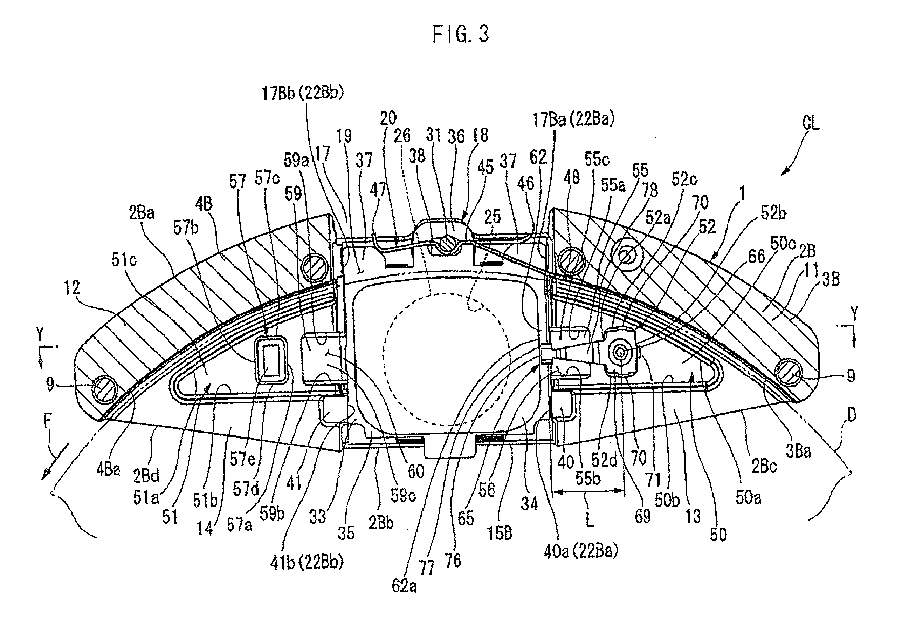

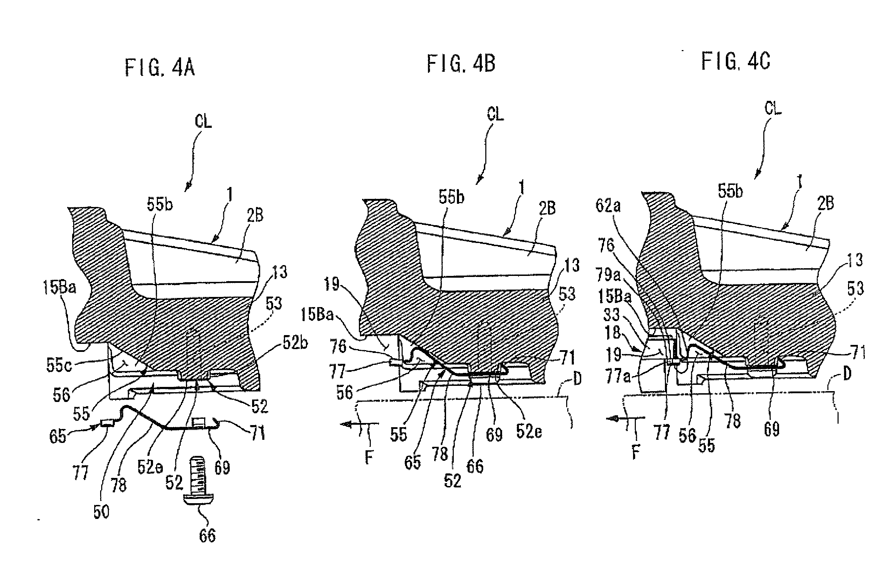

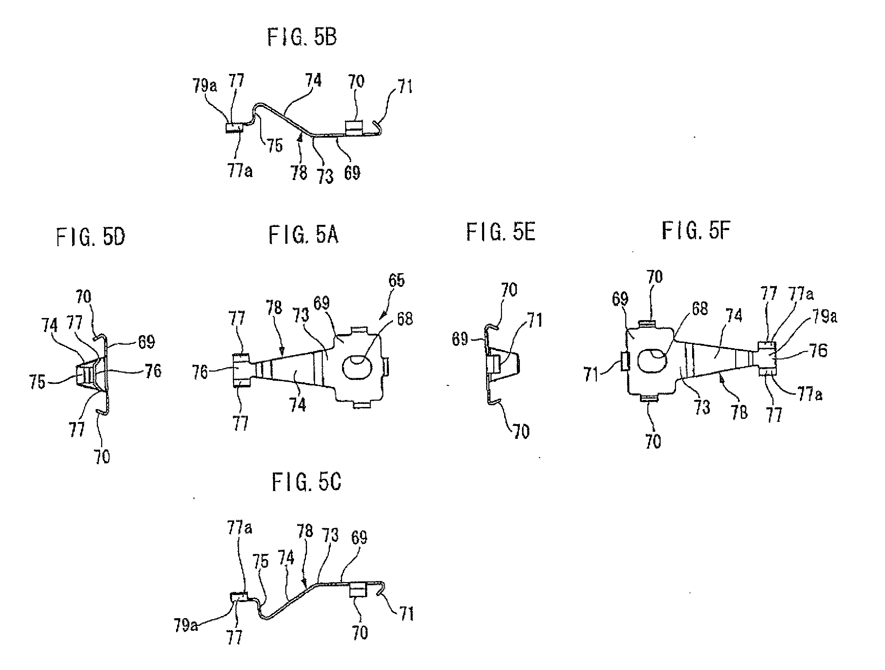

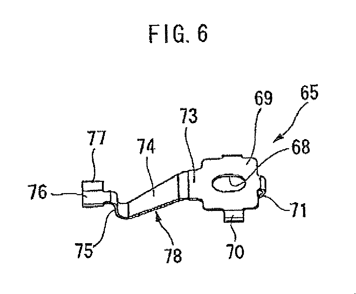

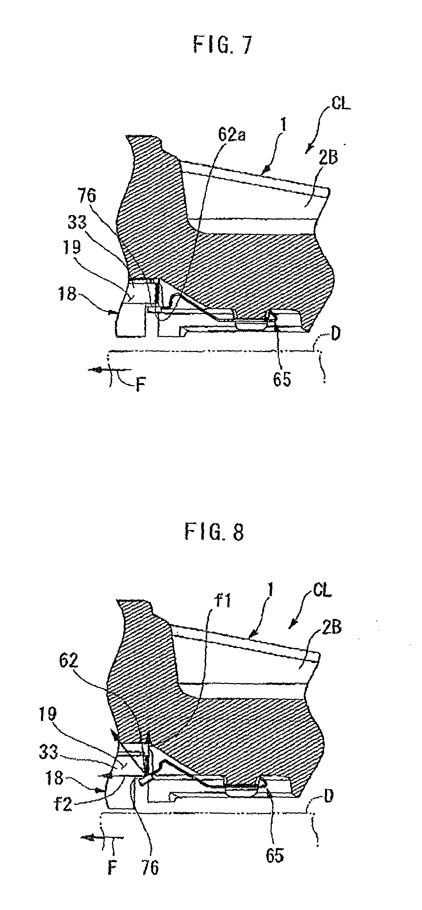

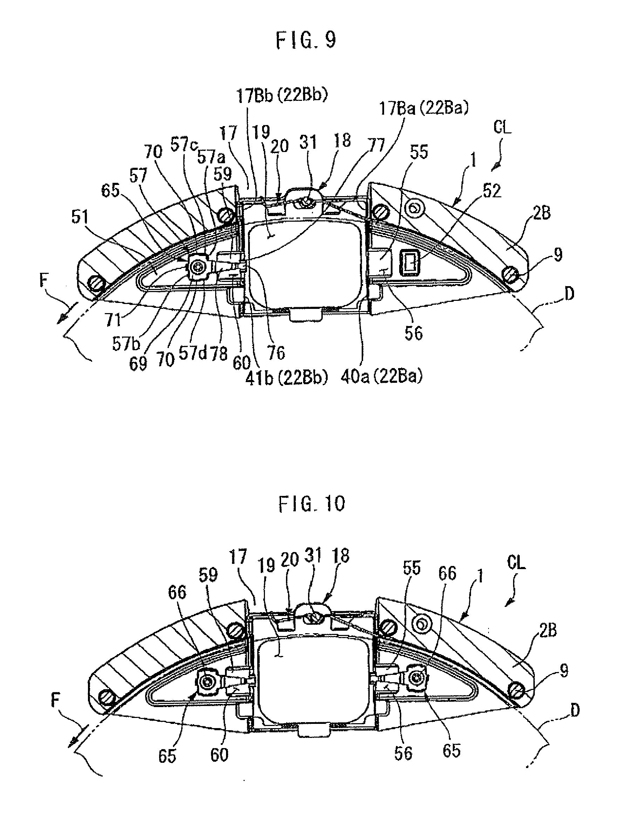

Fig. 1 is a front view showing a disk brake according to the first embodiment of the present invention. Fig. 2 is a plan view showing the disk brake. Fig. 3 is a sectional view taken along the line Z-Z in Fig. 2, showing the disk brake. Figs. 4A to 4C are partially enlarged plan sectional views taken along the line Y-Y in Fig. 3, showing the disk brake, wherein Fig. 4A shows a state before a return spring is assembled, Fig. 4B shows a state after the return spring is assembled and Fig. 4C shows a state after a friction pad is assembled. Figs. 5A to 5F are views showing a return spring of the disk brake, wherein Fig. 5A is a front view, Fig. 5B is a plan view, Fig. 5C is a bottom view, Fig. 5D is a side views, Fig. 5E is a side view and Fig. 5F is a back view. Fig. 6 is a perspective view showing the return spring of the disk brake. Fig. 7 is a partial enlarged plan sectional view taken along the line Y-Y in Fig. 3, showing the disk brake. Fig. 8 is a partial enlarged plan sectional view taken along the line Y-Y in Fig. 3, showing a disk brake of a first modification. Fig. 9 is a front sectional view of a disk brake taken along the line Z-Z in Fig. 2, showing a disk brake of a second modification. Fig. 10 is a front sectional view taken along the line Z-Z in Fig. 2, showing a disk brake of a third modification.

A disk brake according to the first embodiment is a disk brake for a four-wheel vehicle, in which a caliper CL is fixed to a vehicle body. In Figs. 1 to 3, a caliper body 1 has an inner caliper half 2A disposed at the axially inner side (relative to the vehicle) of a disk rotor D, which rotates together with an axle of the vehicle, and an outer caliper half 2B disposed at the axially outer side (relative to the vehicle) of the disk rotor D, and the halves 2A and 2B are abut-joined together as one unit. In Figs. 1 to 3, the arrow F indicates the rotational direction of the disk rotor D when the vehicle is traveling forward.

As shown in Fig. 1, the inner caliper half 2A includes an outer peripheral end surface 2Aa which is of are-shape generally coaxial with the disk rotor D, an inner peripheral end surface 2Ab which is of arc-shape generally coaxial with the outer peripheral end surface 2Aa, a rotation-in side end surface 2Ac which connects disk rotation-in sides of the outer peripheral end surface 2Aa and the inner peripheral end surface 2Ab during forward braking with each other, and a rotation-out side end surface 2Ad which connects disk rotation-out sides of the outer peripheral end surface 2Aa and the inner peripheral end surface 2Ab during forward braking with each other. The rotation-in side end surface 2Ac and the rotation-out side end surface 2Ad are mirror symmetric with respect to a center line connecting centers of the outer peripheral end surface 2Aa and the inner peripheral end surface 2Ab in a circumferential direction of the disk. The rotation-in side end surface 2Ac and the rotation-out side end surface 2Ad are respectively located on directions of extending lines intersecting with the center line at acute angle.

As shown in Fig. 2, the inner caliper half 2A has projecting portions 3A and 4A, which project toward the disk rotor D, at its outer edge in the radial direction of the disk. The projecting portions 3A and 4A are respectively located at two positions, which are opposite sides in the circumferential direction of the disk, i.e., a rotation-in side and a rotation-out side during forward braking. The outer caliper half 2B also includes projecting portions 3B and 4B, which project toward the disk rotor D, at its outer edge in the radial direction of the disk. The projecting portions 3B and 4B are respectively located at two positions, which are opposite sides in the circumferential direction of the disk, i.e., a rotation-in side and a rotation-out side during forward braking. The projecting portions 3A and 4A and projecting portions 3B and 4B have generally constant widths in the circumferential direction of the disk irrespective of positions of the disk in the axial direction.

As shown in Fig. 3, the outer caliper half 2B includes an outer peripheral end surface 2Ba which is of arc-shape similar to the outer peripheral end surface 2Aa of the inner caliper half 2A shown in Fig. 1, a rotation-in side end surface 2Bc located on a direction of an extending line intersecting with the above-described center line at a greater angle comparing to the rotation-in side end surface 2Ac of the inner caliper half 2A shown in Fig. 1, as shown in Fig. 3, a rotation-out side end surface 2Bd located on a direction of an extending line intersecting with the above-described center line at a greater angle comparing to the rotation-out side end surface 2Ad of the inner caliper half 2A shown in Fig. 1, as shown in Fig. 3, and an inner end surface 2Bb located on a direction of an extending line orthogonal to the above-described center line. The inner caliper half 2A shown in Fig. 1 projects radially inward of the disk rotor D further than the outer caliper half 2B shown in Fig. 3 due to difference between an angle made with the rotation-in side end surface 2Ac and the rotation-out side end surface 2Ad shown in Fig. 1, and an angle made with the rotation-in side end surface 2Bc and the rotation-out side end surface 2Bd shown in Fig. 3.

Inner peripheral surfaces 3Ba and 4Ba of the projecting portions 3B and 4B of the outer caliper half 2B are of arc-shapes which are coaxial with the outer peripheral end surface 2Ba. Also, inner peripheral surfaces of the projecting portions 3 A and 4A of the inner caliper half 2A shown in Fig. 2 are of arc-shapes (not shown).

The projecting portions 3A and 3B on the disk rotation-in side during forward braking and the projecting portions 4A and 4B on the disk rotation-out side during forward braking are abutted against each other, and in this state, the caliper halves 2A and 2B are jointed together by a plurality of tie bolts 9, 9, 9 and 9. Specifically, two tie bolts on each side, i.e., total four tie bolts are disposed at predetermined distance from one another in a circumferential direction of the disk. The tie bolts extend in the axial direction of the disk. As shown in Fig. 3, the tie bolts 9 are disposed in the outer caliper half2B on both end sides of the projecting portions 3B and 4B in the circumferential direction of the disk at positions closer to the inner peripheral surfaces 3Ba and 4Ba, and the tie bolts 9 arc also disposed in the inner caliper half 2A at the similar positions.

As shown in Fig. 1, the caliper body 1 is fixed to a non-rotating portion of the vehicle by bolts (not shown) passing through the mounting holes 10 extending in an axial direction of the disk provided at two locations on the rotation-in side end surface 2Ac and on rotation-out side end surface 2Ad close to the inner peripheral end surface 2Ab of the inner caliper half 2A. In this mounted state, the projecting portions 3A, 3B, 4A, and 4B are disposed to extend over the radially outer side of the disk rotor D. That is, as shown in Fig. 3, the inner peripheral surfaces 3Ba and 4Ba of the projecting portions 3B and 4B oppose to the outer peripheral surface of the disk rotor D with a generally constant gap, and the inner peripheral surfaces of the projecting portions 3A and 4A are also disposed in the same manner.

Thus, the projecting portions 3A and 3B constitute a disk pass portion 11 extending over the disk rotor D at the radially outer side of the disk rotor D on the disk rotation-in side during forward braking. The projecting portions 4A and 4B constitute a disk pass portion 12 extending over the disk rotor D at the radially outer side of the disk rotor D on the disk rotation-out side during forward braking. These two disk pass portions 11 and 12 are disposed mirror symmetrically at a distance from each other in the circumferential disk direction on the same circumference.

The caliper body 1 is divided into an area including the disk pass portion 11, an area including the disk pass portion 12 and an area located between these two areas in the circumferential disk direction. The area including the disk pass portion 11 is a torque receiving portion (pad guide portion) 13 which mainly receives a torque during backward braking, the area including the disk pass portion 12 is a torque receiving portion (pad guide portion) 14 which mainly receives a torque during forward braking, and the area which does not includes the disk pass portions 11 or 12 and which is located between these two areas are an inner jointing portion 15A and an outer jointing portion 15B which joint the torque receiving portions 13 and 14 together.

A generally rectangular opening 17 is provided between the disk pass portions 11 and 12. The opening 17 penetrates in the radial disk direction. As shown in Fig. 3, the opening 17, which is in the caliper body 1, which constitutes an outer end of a pad insertion space 19 in the radial direction of the disk, and through which a later-described friction pad 18 is inserted from outer side in the radial direction of the disk. In other words, the pad insertion space 19 is a projection space of the opening 17 of the caliper body 1 along a disk radial direction. That is, the caliper CL is a so-called open top type caliper. A cover spring 20 covering the friction pad 18 disposed in the pad insertion space 19 is disposed in the opening 17.

As shown in Fig. 2, opposing surface 17Aa on disk rotation-in side during forward braking and opposing surface 17Ab on disk rotation-out side during forward braking, which oppose to each other, are formed on the torque receiving portions 13 and 14 of the inner caliper half 2A at positions where the opening 17 is formed. The opposing surfaces 17Aa and 17Ab are formed along the radial direction of the disk and in parallel to each other along the axial direction of the disk. Also, opposing surface 17Ba on disk rotation-in side during forward braking and opposing surface 17Bb on disk rotation-out side during forward braking, which oppose to each other, are formed on the torque receiving portions 13 and 14 of the outer caliper half 2B at positions where the opening 17 is formed. The opposing surfaces 17Ba and 17Bb are formed along the radial direction of the disk and in parallel to each other along the axial direction of the disk.

The inner opposing surface 17Ab of the torque receiving portion 14 on the disk rotation-out side during forward braking guides the inner friction pad 18 inserted into the pad insertion space 19 slidably along the axial direction of the disk, and constitutes a portion of an inner torque receiving surface (pad guide surface) 22Ab on the outer side in the radial disk direction which mainly receives a braking toque during forward braking from the friction pad 18. An inner opposing surface 17Aa of the torque receiving portion 13 on the disk rotation-in side during forward braking guides the inner friction pad 18 inserted into the pad insertion space 19 slidably along the axial direction of the disk, and constitutes a portion of an inner torque receiving surface (pad guide surface) 22Aa on the outer side in the radial disk direction which mainly receives a braking toque during backward braking from the friction pad 18.

Similarly, the outer opposing surface 17Bb on the disk rotation-out side during forward braking guides the outer friction pad 18 slidably along the axial direction of the disk, and constitutes a portion of the outer torque receiving surface (pad guide surface) 22Bb on the outer side in the radial disk direction which mainly receives a braking torque during forward braking from the friction pad 18. The outer opposing surface 17Ba on the disk rotation-in side during forward braking guides the outer friction pad 18 slidably along the axial direction of the disk, and constitutes a portion of the outer torque receiving surface (pad guide surface) 22Ba on the outer side in the radial disk direction which mainly receives a braking torque during backward braking from the friction pad 18.

Bores 25 having circular cross sections and predetermined depth along the disk axial direction are provided on a bore forming surface (piston projecting surface) 15Aa and a bore forming surface 15Ba (piston projecting surface). The bore forming surface 15Aa is on the jointing portion 15A of the inner caliper half 2A between the torque receiving portions 13 and 14, opposes to the disk rotor D in the axial direction, and is orthogonal to the axial direction of the disk. The bore forming surface 15Ba is on the jointing portion 15B of the outer caliper half 2B between the torque receiving portions 13 and 14, opposes to the disk rotor D in the axial direction, and is orthogonal to the disk axial direction. These bores 25 are disposed coaxially in such a manner to oppose to each other. A bottomed cylindrical piston 26 as a pressing means is slidably accommodated in each bore 25. Thus, in the caliper CL, the pistons 26 are arranged on both sides of the disk rotor D coaxially with each other. That is, the caliper CL is an opposed piston type two pot caliper.

Brake liquid introduced from the liquid supply opening 27 shown in Figs. 1 and 2 is supplied to each of the bores 25. The pair of pistons 26 project from the bore forming surfaces 15Aa and 15Ba in synchronization with each other corresponding to the supply of the brake liquid. The inner caliper half 2A has an air vent bleeder 28.

As shown in Fig. 2, intermediate portions of the inner caliper half 2A and the outer caliper half 2B in the disk circumferential direction respectively have pad pin mounting portions 30A and 30B facing the opening 17. A pad pin 31 extending along the axial direction of the disk is provided between the pad pin mounting portions 30A and 30B. The pad pin 31 is inserted through the pair of friction pads 18 inserted into the pad insertion space 19 from outside in the radial disk direction, whereby the friction pads 18 are suspended and supported by the caliper body 1 slidably in the axial direction of the disk. The pad pin 31 is disposed slightly offset toward the disk rotation-in side during forward braking from a central position of the opening 17 in the circumferential direction of the disk.

The pair of friction pads 18 are disposed such as to oppose to both surfaces of the disk rotor D in the axial direction of the disk. As shown in Figs. 2 and 3, each friction pad 18 includes a back plate 33 and a friction material 34 bonded to the back plate 33. As shown in Fig. 3 showing the outer side only, the back plate 33 includes a generally rectangular main plate 35 to which the friction material 34 is bonded, a support boss portion 36 projecting outward in the radial direction of the disk and provided in the center of the main plate 35 on the outer side in the disk radial direction, and shoulder boss portions 37 respectively projecting outward in the radial direction of the disk from the disk rotation-in side and the rotation-out side of the main plate 35 during forward braking. The back plates 33 are mirror symmetric with respect to a center in the circumferential direction of the disk.

In the support boss portion 36, a pad pin hole 38, which is formed in long hole shape and which is long in the circumferential direction of the disk and which penetrates along the axial direction of the disk, is formed to extend toward both sides of the friction pad 18 with respect to the central position in the circumferential direction of the disk. The pad pin 31 which is disposed offset toward the disk rotation-in side is inserted into the disk rotation-in side of the pad pin hole 38 and with this, the friction pad 18 is supported by the pad pin 31. Since the pad pin hole 38 is in a long hole form, the friction pads 18 having common shape are mounted on inner and outer sides which have asymmetry shape as viewed from the friction material 34.

Since the pad pin hole 3 8 is in a long hole form in the circumferential direction of the disk, the friction pad 18 slightly moves in the circumferential direction of the disk and can abut against the torque receiving surfaces 22Aa, 22Ab, 22Ba and 22Bb shown in Fig. 2.

As shown in Fig. 3 showing only the outer side, guide projecting portions 40 and 41 are respectively provided on the inner caliper half 2A and the outer caliper half 2B in positions where the torque receiving portions 13 and 14 are formed. The guide projecting portions 40 and 41 are two projecting portions, which guide the pair of friction pads 18 disposed on both sides of the disk rotor D, and receive torques generated in the friction pads 18. The guide projecting portions 40 and 41 are provided on both sides in the circumferential disk direction to project in the axial direction of the disk rotor D.

An opposing surface 40a and an opposing surface 41b are mutually opposed along the radial direction of the disk and axial direction of the disk. Out of the opposing surfaces 40a and 41b, the opposing surface 41b on the disk rotation-out side during forward braking constitutes a portion of the inner side of the forward side torque receiving surface 22Bb in the radial direction of the disk. The disk rotation-in side opposing surface 40a during forward braking which opposes to the opposing surface 41b constitutes a portion of the inner side of the backward side torque receiving surface 22Ba in the radial direction of the disk.

As shown in Fig. 2, the torque receiving surfaces 22Aa, 22Ab, 22Ba and 22Bb and the bore forming surfaces 15Aa and 15Ba form, on the caliper CL, the pad insertion spaces 19 into which the friction pads 18 can be inserted from outer side in the radial direction of the disk rotor D.

As shown in Figs. 2 and 3, the cover spring 20 disposed in the opening 17 is engaged with the pad pin 31 and presses the pair of friction pads 18 at both sides thereof in the circumferential direction of the disk.

The cover spring 20 is integrally formed by punching and bending a metal thin plate having spring function such as stainless steel plate using a press. The cover spring 20 is engaged with inner side of the pad pin 31 in the radial direction of the disk in the body portion 45 disposed in the middle in circumferential direction of the disk.

The cover spring 20 includes a pair of rotation-in side pressing portions 46 which extend toward the disk rotation-in side during forward braking from both sides of the body portion 45 in the axial direction of the disk, abut against the shoulder boss portion 37 of the disk rotation-in side of the pair of friction pads 18 so as to press the pair of friction pad 18 inward of the radial direction of the disk.

The cover spring 20 further includes a pair of rotation-out side pressing portions 47. The rotation-out side pressing portions 47 extend in the opposite side of the rotation-in side pressing portions 46, that is, toward the disk rotation-out side during forward braking from both sides of the body portion 45 in the axial direction of the disk, abut against a chamfered portion of the shoulder boss portion 37 of the disk rotation-out side during forward braking of the pair of friction pads 18 so as to press the pair of friction pads 18 inward in the radial direction of the disk and toward the disk rotation-out side during forward braking.

In addition, the cover spring 20 includes a caliper abutting portion 48 which extends to the disk rotation-in side during forward braking that is the same as the rotation-in side pressing portion 46 from the central side of the body portion 45 in the axial direction of the disk, and abuts against the inner side of the disk pass portion 11 in the radial direction of the disk.

As shown in Fig. 3 showing the outer side only, on the inner caliper half 2A in positions where the torque receiving portions 13 and 14 are formed and on the torque receiving portions 13 and 14, and on the outer caliper half 2B in positions where the torque receiving portions 13 and 14 are formed, a recess 50 being caved in the axial direction of the disk is formed between the disk pass portion 11 and the guide projecting portion 40, and a recess 51 being caved in the axial direction of the disk is formed between the disk pass portion 12 and the guide projecting portion 41.

The recesses 50 and 51 are mirror symmetric with respect to the center line of the mirror symmetric disk pass portions 11 and 12, and have shapes passing to reach the pad insertion space 19. The recess 50 has a wall surface 50a on the outer side in the radial direction of the disk of arc-shape extending along the disk pass portion 11, and a wall surface 50b on the inner side in the radial direction of the disk of flat-shape extending along a direction orthogonal to the center line of the mirror symmetry. The recess 51 also has a wall surface 51a on the outer side in the radial direction of the disk of arc-shape extending along the disk pass portion 12, and a wall surface 51b on the inner side in the radial direction of the disk of flat-shape extending along a direction orthogonal to the center line of the mirror symmetry. The wall surfaces 50a and 51a are disposed on the same circumference, and the wall surfaces 50b and 51b are disposed on the same plane.

A bottom surface 50c of the recess 50 is orthogonal to the axial direction of the disk, and a projecting stage 52 projecting toward the disk rotor D along the axial direction of the disk is formed at generally central position of the bottom surface 50c. The projecting stage 52 includes a wall surface 52a which is on the side of the pad insertion space 19 and which extends along the penetrating direction of the pad insertion space 19, a wall surface 52b which is on the opposite side from the pad insertion space 19 and which extends along the penetrating direction of the pad insertion space 19, a wall surface 52c which is on the outer side of the radial direction of the disk and which is orthogonal to the wall surfaces 52a and 52b, and a wall surface 52d which is on the inner side in the radial direction of the disk and which is orthogonal to the wall surfaces 52a and 52b so as to form rectangular shape. The projecting stage 52 also includes a top surface (disk rotor opposing surface) 52e, which opposes to the disk rotor D and shown in Fig. 4A and in which a screw hole 53 is formed along the axial direction of the disk in a central portion thereof.

As shown in Fig. 3, a groove 55 is formed in parallel to the wall surfaces 52c and 52d of the projecting stage 52 in the bottom surface 50c of the recess 50 on the side of the pad insertion space 19. The depth of the groove 55 is increased toward the pad insertion space 19. That is, the groove 55 includes a wall surface 55a on the outer side in the radial direction of the disk which is in parallel to the wall surfaces 52c and 52d of the projecting stage 52, a wall surface 55b on the inner side of the radial direction of the disk which is in parallel to the wall surfaces 52c and 52d, and a bottom surface 55c whose depth is increased toward the pad insertion space 19. In other words, the groove 55 recesses toward the opposite side of the disk rotor D in the axial direction of the disk, and the bottom surface 55c is more separated from the disk rotor D toward the pad insertion space 19. A space 56 is formed in the caliper body 1 by the groove 55.

A bottom surface 51c of the recess 51 is orthogonal to the axial direction of the disk, and a projecting stage 57 projecting along the axial direction of the disk is formed in a generally central position of the bottom surface 51c. The projecting stage 57 includes a wall surface 57a located on the side of the pad insertion space 19 and extending along the penetrating direction of the pad insertion space 19, a wall surface 57b located on the opposite side from the pad insertion space 19 and extending in the penetrating direction of the pad insertion space 19, a wall surface 57c located on the outer side in the radial direction of the disk and orthogonal to the wall surfaces 57a and 57b, and a wall surface 57d located on the inner side in the radial direction of the disk and is orthogonal to the wall surfaces 57a and 57b so as to form rectangular shape.

A groove 59 is also formed in parallel to the wall surfaces 57c and 57d of the projecting stage 57 in the bottom surface 51c of the recess 51 on the side of the pad insertion space 19. The depth of the groove 59 is increased toward the pad insertion space 19. That is, the groove 59 includes a wall surface 59a on the outer side in the radial direction of the disk which is in parallel to the wall surfaces 57c and 57d of the projecting stage 57, a wall surface 59b on the inner side of the radial direction of the disk which is in parallel to the wall surfaces 57c and 57d, and a bottom surface 59c whose depth is increased toward the pad insertion space 19. In other words, the groove 59 recesses toward the opposite side of the disk rotor D in the axial direction of the disk, and the bottom surface 59c is more separated from the disk rotor D toward the pad insertion space 19. A space 60 is formed in the caliper body 1 by the groove 59.

In the disk brake of the first embodiment, both in the inner caliper half 2A and outer caliper half 2B, a return spring 65 is fixed to the projecting stage 52 of the recess 50 on the disk rotation-in side during forward braking, as shown in Fig. 3 showing the outer side only. The return spring 65 abuts against an opposing surface (sliding surface) 62a of the disk rotor opposing portion 62 located on the friction pad 18 on the side opposing to the disk rotor D, more concretely on the side of the disk rotor D of the back plate 33 of the friction pad 18 and on the disk rotation-in side during forward braking, so as to urge the friction pad 18 in a direction separating the friction pad 18 from the disk rotor D in the axial direction.

The return spring 65 is integrally formed by punching and bending a metal thin plate having spring function such as stainless steel plate using a press. As shown in Figs. 5 and 6, the return spring 65 includes a base plate (the other end) 69, which is in rectangular and flat plate shape and has a long mounting hole 68 which is long in a short side direction disposed in generally central portion, a pair of latch pieces 70 and 70 bent from the intermediate portions of the both short sides of the base plate 69 to the same side with respect to the base plate 69, and a latch piece 71 bent from the central portion of the one long side of the base plate 69 to the same side as the latch pieces 70 with respect to the base plate 69.

The return spring 65 includes an extending plate 73 extending in the same plane as that of the base plate 69 from a central portion of the other long side of the base plate 69 in a direction away from the latch piece 71, an inclined plate 74 extending diagonally from the side of the extending plate 73 opposite from the base plate 69 in a direction opposing to the extending plate 73 such that the extending tip end is more separated away from the base plate portion 69 and such that the inclined plate 74 is located in the same direction as the bending directions of the latch pieces 70 and 71, an intermediate plate 75 which bents from the side of the inclined plate 74 opposite from the extending plate 73 in a direction opposite from the bending directions of the latch pieces 70 and 71, and a tip end plate (one end) 76 extending from the side of the intermediate plate 75 opposite from the inclined plate 74 in a direction away from the base plate 69 in parallel to the base plate 69, and a pair of guide plates 77 and 77 diagonally extending from both side edges of the tip end plate 76 to the opposite side from the latch pieces 70 and 71 such that tip ends of the guide plates 77 and 77 are more separated away from each other. Here, the tip end plate 76 has such a shape that the tip end plate 76 slightly extends toward the guide plates 77 and 77 comparing to the intermediate plate 75.

As shown in Fig. 5C, the extending plate 73, the inclined plate 74 and the intermediate plate 75 existing between the tip end plate 76 on the one end and the base plate 69 on the other end form generally S-shape as a whole as viewed from inside in the radial direction of the disk rotor, which are bent at a plurality of locations to form a bent portion 78 and disposed in the space 56. The extending plate 73 and the inclined plate 74 are of tapered shape such that their widths are gradually reduced in a direction away from the base plate 69. Surfaces of the tip end plate 76 and the pair of guide plates 77 and 77 on the opposite side from the bending directions of the guide plates are abutting surface (friction pad abutting surface) 79a which abuts against the friction pad 18 when the friction pad 18 is inserted. The abutting surface 79a at an end in the radial direction of the disk which is formed by the guide plate 77, is formed as a pad guide surface (pad guide) 77a extending in a direction intersecting with the surface of the disk rotor D. The pad guide surface 77a is a flat surface portion extending straightly in a direction intersecting with the surface of the disk rotor D.

Both in outer side and inner side, as shown in Fig. 3 showing only the outer side, in the return spring 65, one latch piece 70 is latched with the wall surface 52c, the other latch piece 70 is latched with the wall surface 52d, the latch piece 71 is latched with the wall surface 52b and as shown in Figs. 4A to B, the base plate 69 abuts against the top surface 52e. In such state, the bolt 66 shown in Fig. 4B which is inserted into the mounting hole 68 shown in Fig. 5 is threadedly engaged with the screw hole 53. Accordingly, the base plate 69 is fixed in a state where the projecting stage 52 of the caliper CL prevents the base plate 69 from rotating.

In the mounted state on the caliper body 1, the return spring 65 is disposed with its S-shaped bent portion 78 placed in the space 56 of the groove 55 formed at this position of the caliper body 1. As shown in Fig. 3, the tip end plate 76 of the return spring 65 projects beyond the backward side torque receiving surface 22Ba and enters into the pad insertion space 19. In other words, the tip end plate 76 is disposed in the projection space of the opening 17 of the caliper CL. As shown in Fig. 4B, the tip end plate 76 is generally in parallel to the bore forming surface 15Ba and opposes thereto. As shown in Fig. 3, the tip end plate 76 is located in a certain range where the torque receiving surface 22Ba, which receives a braking torque of the friction pad 18 in the radial direction of the disk rotor, exists. The tip end plate 76 is disposed closer to the piston 26 than the torque receiving surface 22Ba in the circumferential direction of the disk. As shown in Fig. 4B, the base plate 69 of the return spring 65 is fixed to the top surface 52e of the caliper CL existing on the side opposing to the tip end plate 76. The pair of guide plates 77 and 77 of the return springs 65 has base ends located on the side of the torque receiving portion 13 to which the return spring 65 is fixed in the axial direction of the disk, and tip ends located on the side of the disk rotor D in the disk axial direction. Since the return spring 65 includes the pair of guide plates 77 and 77 and are mirror symmetric, even if the inner and outer return springs 65 having the same shapes are mounted on the same side in the circumferential direction of the disk, the guide plates 77 and 77 can be disposed on the outer side of the tip end plate 76 in the radial direction of the disk.

As shown in Fig. 4B, when the friction pad 18 is mounted, in the outer side for example, the friction pad 18 is inserted into the pad insertion space 19 of the caliper CL, on which the return spring 65 is mounted, from outer side in the radial direction of the disk rotor D. At that time, as shown in Fig. 4C, the back plate 33 of the friction pad 18 is inserted in between the tip end plate 76 of the return spring 65 and the bore forming surface 15Ba of the caliper CL opposing to the tip end plate 76, more specifically, in between the tip end plate 76 of the return spring 65 and the piston 26 projecting from the bore forming surface 15Ba as shown in Fig. 3. At that time, if the distance between the tip end plate 76 and the piston 26 is slightly smaller than the thickness of the back plate 33, the back plate 33 first abuts against the pad guide surface 77a of the guide plate 77 of the return spring 65, the back plate 33 extends onto the pad guide surface 77a and deforms the bent portion 78 due to the inclination so as to separate the tip end plate 76 from the bore forming surface 15Ba, and enters in between the piston 26 and the tip end plate 76. At that time, the tip end plate 76 of the return spring 65 slides on the opposing surface 62a on the side opposing to the disk rotor D of the friction pad 18, That is, when the friction pad 18 is inserted into the caliper CL from the outer side in the radial direction of the disk rotor D, the tip end plate 76 of the return spring 65 can slide on the opposing surface 62a. In a state where the friction pad 18 is mounted in this manner, the tip end plate 76 of the return spring 65 comes into surface-contact with the opposing surface 62a of the back plate 33 in parallel.

In a state before the caliper CL is assembled to a vehicle, brake liquid is not introduced into the bore 25, and thus a projecting amount of the piston 26 is the smallest. As shown in Fig. 7 showing the outer side only, when the friction pad 18 is inserted in this state, the tip end plate 76 of the return spring 65 opposes to the opposing surface 62a at a distance. The opposing surface 62a of the back plate 33 of the friction pad 18 opposes to the disk rotor D. That is, the friction pad 18 can more easily be inserted into the caliper CL without deforming the return spring 65. In this case, after the caliper CL is assembled to the vehicle, brake liquid is introduced while air is vented so that the piston 26 and the friction pad 18 move forward. Accordingly, the opposing surface 62a of the back plate 33 abuts against the tip end plate 76 of the return spring 65 so as to deform the return spring 65 toward the disk rotor D.

When the tip end plate 76 of the return spring 65 is formed in a shape, which is not parallel to the opposing surface 62a which opposes to the disk rotor D in the back plate 33 of the friction pad 18 but has an angle widening toward the disk rotor D, the tip end plate 76 of the return spring 65 slides on the angle portion which is a peripheral edge of the disk rotor opposing portion 62, which opposes to the disk rotor D, in the back plate 33 of the friction pad 18 as shown in Fig. 8 showing the outer side only. With this abutment state, a returning force f1 forcing the friction pad 18 to separate from the disk rotor D, and a pressing force f2 toward the disk rotation-out side during forward braking can be generated by the return spring 65, and thus the friction pad 18 can be brought into abutment against the torque receiving surface 22Bb during forward braking shown in Fig. 3.

In this manner, the friction pad 18 is disposed between the outer piston 26 and the return spring 65. By inserting the pad pins 31 through the pad pin holes 38 of the friction pads 18 and 18 in a state where the friction pad 18 is also disposed on the inner side in the same manner, as shown in Fig. 2, the pair of friction pads 18 and 18 can be suspended and supported by the pad pin 31 provided between the pad pin mounting portions 30A and 30B of the caliper body 1.

In this state, as shown in Fig. 3, the tip end plate 76 of the return spring 65 is disposed at an intermediate portion in the radial direction of the disk rotor of the friction pad 18 in the pad insertion space 19 of the caliper CL. In this case, since the intermediate portion in the radial direction of the disk rotor where the tip end plate 76 of the return spring 65 is disposed is located on the inner side in the radial direction of the disk than the outer periphery of the disk rotor D, it is possible to avoid interference with the disk pass portions 11 and 12. It is preferable that the tip end plate 76 of the return spring 65 effects on a position corresponding to a center of gravity of the friction pad 18 in the radial direction of the disk of the friction pad 18 in order to pull back whole of the friction pad 18. Since the center of gravity of the friction pad 18 is generally located near the central portion of the friction material 34 in the radial direction of the disk, it is preferable that the tip end plate 76 effects on that location. As shown in Fig. 3, when the sliding resistance between the friction pad 18 and the pad pin 31 and the sliding resistance between the friction pad 18 and the cover spring 20 are taken into consideration, it is possible to dispose the tip end plate 76 of the return spring 65 closer to the outer peripheral side than the central portion of the friction material 34 in the radial direction of the disk so that the friction pad 18 does not incline toward the disk rotor D when the friction pad 18 is separated from the disk rotor D. Further, depending upon the mounting angle position of the caliper body 1 in the circumferential direction of the disk of the disk rotor D, it is also possible to take the gravity effecting on the friction pad 18 into consideration, and define a position of the intermediate portion of the friction pad 18 in the direction of the disk rotor where the tip end plate 76 of the return spring 65 effects. The friction pad 18 inserted in the caliper CL in this manner is slidably guided in the axial disk rotor D direction by the torque receiving portions 13 and 14, and the base plate 69 of the return spring 65 is provided on the torque receiving portion 13 on the disk rotation-in side.

According to the disk brake of the first embodiment, if the brake liquid pressure in the bore 25 of the caliper CL is increased, the pair of pistons 26 provided in the caliper CL project from the bore forming surfaces 15Aa and 15Ba, thereby moving the pair of friction pads 18 and 18 toward the disk rotor D in the axial direction of thereof. Accordingly the friction pads 18 and 18 are pressed against the disk rotor D resulting in generation of a braking force. At that time, the tip end plate 76 of the return spring 65 also moves toward the disk rotor D together with the friction pad 18, thereby deforming mainly the bent portion 78. Therefore, when the brake liquid pressure in the bore 25 of the caliper CL is released thereafter, the deformation of the of the return spring 65 mainly at the bent portion 78 is restored, thereby moving the tip end plate 76 in a direction separating from the disk rotor D in its axial direction. Accordingly, the tip end plate 76 provides a returning force to the friction pad 18 so as to separate the friction pad 18 from the disk rotor D.

According to the conventional techniques including that disposed in the patent document 1, a tongue piece which directly transmits a returning force in the axial direction of the disk to the outer peripheral side of the friction pad in the radial direction of the disk, and another tongue piece which transmits the returning force in the axial direction of the disk, by means of component force, to the inner peripheral side of the friction pad in the radial direction of the disk are integrally provided. Therefore, the conventional techniques have the following problems.

Since the tongue piece exists on the outer side of the friction pad in the radial direction of the disk, when the friction pad is inserted from the opening of the caliper, it is necessary to largely bend the tongue piece, and it is necessary to set the spring constant of the tongue piece to an extremely small value. As a result, a force returning the friction pad in the axial direction of the disk is limited, and thus a load is not sufficient. Further, the assembling operability is deteriorated,

Since the return spring is integrally formed with the pad spring, the shape is complicated and the size is increased, resulting in the cost increase.

Since the tongue piece which generates the returning force toward the outer peripheral side of the friction pad in the radial direction of the disk is provided, the return spring protrudes from the caliper CL radially outward of the disk, and thus it is necessary to pay attention to the interference when the disk brake is assembled to a vehicle, and to deformation when the caliper is assembled.

According to the disk brake of the first embodiment, on the other hand, since the tip end plate 76 of the return spring 65 is disposed at the intermediate portion of the friction pad 18 in the pad insertion space 19 of the caliper CL in the radial direction of the disk rotor, when the friction pad 18 is inserted in between the tip end plate 76 and the bore forming surfaces 15Aa and 15Ba of the caliper CL opposing to the tip end plate 76, it is unnecessary to deform the return spring 65 more than necessary, and the return spring 65 does not interfere. Therefore, sufficient force returning the friction pad 18 in the axial direction of the disk is provided without necessity of setting the spring constant of the return spring 65 to a small value, which makes it easy to insert the friction pad 18, and improves the assembling operability.

Since the return spring 65 is disposed at the intermediate portion of the friction pad 18 in the radial direction of the disk rotor, the return spring 65 does not protrude from the caliper CL. Therefore, it is not necessary to pay attention to the interference when the disk brake is assembled to a vehicle, and to deformation when the caliper CL is assembled.

Since the return spring 65 can reliably provide a returning force to the friction pad 18, behavior of the friction pad 18 is not disordered, and a gap with the disk rotor D can be formed on the disk rotation-in side during forward braking of the friction pad 18. As a result, the friction pad 18 does not contact with the disk rotor D without braking while driving the vehicle, thus draggling is not generated, whereby the probability of generation of brake judder is reduced and fuel economy of a vehicle is enhanced. Especially since the return spring 65 is provided on the disk rotation-in side during forward braking, the gap with the disk rotor D can be generated on the disk rotation-in side in the friction pad 18, draggling caused by moment in a direction in which the friction pad 18 becomes entangled into the disk rotor D can be avoided, and it is possible to effectively suppress the generation of brake judder.

Further, since the tip end plate 76 of the return spring 65 is disposed at the intermediate portion of the friction pad 18 in the pad insertion space 19 of the caliper CL in the radial direction of the disk rotor, the intermediate portion of the friction pad 18 in the radial direction of the disk rotor is pushed, and the friction pad 18 can be separated from the disk rotor D in an excellent attitude.

Since the return spring 65 is independent from the cover spring 20, shapes of both the members are not complicated, the structure can be made compact and cost can be reduced.

Since the base plate 69 of the return spring 65 is fixed to the caliper CL, the return spring 65 can be supported stably.

Since the base plate 69 of the return spring 65 is fixed to the top surface 52e of the return spring 65 of the caliper CL on the side opposing to the tip end plate 76, the return spring 65 can be made compact.

Further, since the intermediate portion of the radial direction of the disk rotor where the tip end plate 76 of the return spring 65 is disposed is located more inward than the outer periphery of the return spring 65, the return spring 65 can be disposed more inward of the caliper CL.

Since the base plate 69 of the return spring 65 is provided on the torque receiving portion 13 which guides the friction pad 18 inserted into the caliper CL slidably in the axial direction of the disk rotor D, the return spring 65 can be supported more stably.

When the friction pad 18 is inserted into the caliper CL, the tip end plate 76 of the return spring 65 slides on the friction pad 18 on the side opposing to the disk rotor D and thus, the friction pad 18 can be inserted while excellently moving the tip end plate 76 of the return spring 65.

The tip end plate 76 of the return spring 65 is disposed in the projection space of the opening 17 of the caliper CL, and the opposing surface 62a of the disk rotor opposing portion 62 of the friction pad 18 inserted into the caliper CL from outside in the radial direction of the disk rotor D. Therefore, it is easy to insert the friction pad 18.

The space 56 is formed in the caliper CL at a location of the intermediate portion between the tip end plate 76 and the base plate 69 of the return spring 65. Therefore, deformation of the bent portion 78, which is the intermediate portion, can be allowed.

The tip end plate 76 of the return spring 65 is disposed at an intermediate position in the radial direction of the disk rotor of the torque receiving portion 13 which receives a braking torque of the friction pad 18. Therefore, it is unnecessary to deform the return spring 65 more than necessary and the return spring 65 does not interfere when the friction pad 18 is inserted between the tip end plate 76 and the bore forming surfaces 15Aa and 15Ba of the caliper CL opposing to the tip end plate 76 from outside in the radial direction of the disk. Thus, sufficient force returning the friction pad 18 in the axial direction of the disk is provided without necessity of setting the spring constant of the return spring 65 to a small value, which makes it easy to insert the friction pad 18, and improves the assembling operability.

The tip end plate 76 of the return spring 65 is disposed closer to the piston 26 than the torque receiving surfaces 22Aa and 22Ba in the pad insertion space 19, and the friction pad 18 is inserted in between the tip end plate 76 of the return spring 65 and the bore forming surfaces 15Aa and 15Ba. Therefore, it is easy to insert the friction pad 18.

Since the S-shaped bent portion 78 is formed on the return spring 65 at the intermediate portion between the tip end plate 76 and the base plate 69, thereby generating sufficient returning force.

Since the base plate 69 of the return spring 65 is fixed to the caliper CL by the bolt 66, it is easy to attach and detach the return spring 65, and it is possible to reliably fix the return spring 65 to the caliper CL.

Since the pad guide surface 77a extending in the direction intersecting with the surface of the disk rotor D is formed on the end of the abutting surface 79a of the tip end plate 76 of the return spring 65 in the radial direction of the disk rotor, the friction pad 18 is smoothly introduced and positioned when it is inserted, and the assembling operability of the friction pad 18 is largely enhanced.

Since the pad guide surface 77a is a flat surface portion extending straightly in the direction intersecting with the surface of the disk rotor D, the pad guide surface 77a can easily be formed.

The extending plate 73 and the inclined plate 74 of the return spring 65 is formed in a shape of long and gradually become narrow from the fixed side to the caliper body 1 toward the friction pad 18. Therefore, stress, which is applied when the friction pad 18 moves until it is entirely worn, is received by bending whole of the return spring 65, and it is less prone to be worn out. Here, the length of the return spring 65 is of dimension L shown in Fig. 3. If the dimension L is long, the spring constant becomes small, and if the size L is short, the spring constant becomes great. Therefore, by defining the size L to an appropriate length in accordance with a distance through which the friction pad 18 moves from its new state until the friction pad 18 is entirely worn, the optimal spring constant can be set. This optimal spring constant is a value allowing to generate a load for returning the friction pad 18 and to elastically deform when the friction pad 18 moves from its new state until friction pad 18 is entirely worn.

The return spring 65 of the above shape has a simple shape and can exhibit sufficient function, the number of bending steps at the time of production is small, and since the developing shape is extremely small when it is stripped from the material using a press, the yield of material is extremely excellent, and disk brakes can be produced at low cost.

In the disk brake of the first embodiment, the return springs 65 are provided on both of the pair of inner and outer friction pads 18 and 18 on the disk rotation-in side during forward braking, but in conditions such as draggling is generated in one of the inner and outer friction pads 18 and 18 because of the limited thermal deformation direction of the disk rotor D, the return spring 65 may be provided on at least one of the friction pads 18 and 18.

As shown in Fig. 9 showing the outer side only, the return springs 65 may be provided on disk rotation-out side during forward braking on both of the outer side and the inner side. In this case, a screw hole (not shown) is formed along the axial direction of the disk on the top surface 57e (see Fig. 3) of the projecting stage 57 of the recess 51. Both of return springs 65 on outer side and inner side are fixed to the projecting stage 57 of the caliper CL by the bolts 66 in a state where one of the latch pieces 70 and 70 is latched with the wall surface 57c, the other latch piece 70 is latched with the wall surface 57d, the latch piece 71 is latched with the wall surface 57b, and the base plate 69 abuts against the top surface 52e. In this state, the return spring 65 is disposed with its S-shaped bent portion 78 placed in the space 60 of the groove 59 formed at this position of the caliper body 1, and the tip end plate 76 projects from the torque receiving surface 22Bb and the like and enters the pad insertion space 19. Also in this case, the return spring 65 may be provided on the disk rotation-out side during forward braking of at least one of the pair of inner and outer friction pads 18 and 18.

As shown in Fig. 10 showing the outer side only, on both the outer and inner sides, the return springs 65 may be provided both on the disk rotation-out side and disk rotation-in side during forward braking in accordance with a generation state of the draggling. Also in this case, the return springs 65 may be provided on both of the disk rotation-out side and disk rotation-in side during forward braking on at least one of the pair of inner and outer friction pads 18 and 18.

Further, the return spring 65 may be provided only on the disk rotation-out side on the outer side, while the return spring 65 may be provided only on the disk rotation-in side on the inner side. Or the return spring 65 may be provided only on the disk rotation-in side on the inner side, while the return spring 65 may be provided only on the disk rotation-out side on the outer side.

Details of the first embodiment have been described above. The effects of the first embodiment will be described below.

When providing the return spring whose one end abuts against the disk rotor of the friction pad to urge the friction pad to separate from the disk rotor in its axial direction on at least one of the pair of friction pads, the one end of the return spring is disposed at the intermediate portion of the friction pad in the pad insertion space of the caliper in the radial direction of the disk rotor, and the friction pad is inserted in between the one end of the return spring and the surface of the caliper opposing to the one end. Accordingly, when the friction pad is inserted in between the one end and the surface of the caliper opposing to the one end from outside in the radial direction of the disk, it is unnecessary to deform the return spring more than necessary, and the return spring 65 does not interfere. Therefore, it is unnecessary to set the spring constant of the return spring to a small value, a force returning the friction pad in the axial direction of the disk is sufficiently obtained, it is easy to insert the friction pad, and the assembling operability can be enhanced.

If the other end of the return spring is provided on the caliper, the return spring can be supported stably.

If the other end of the return spring is fixed to the surface of the caliper opposing to the one end of the return spring, the return spring can be made compact.

If the intermediate portion in the radial direction of the disk rotor where the one end of the return spring is disposed is located more inward than the outer periphery of the disk rotor, the return spring can be disposed more inward of the caliper.

If the other end of the return spring is provided on the pad guide portion which slidably guides the friction pad inserted into the caliper in the axial direction of the disk rotor, the return spring can be supported more stably.

If the one end of the return spring slides on the friction pad on the side opposing to the disk rotor when the friction pad is inserted into the caliper, the friction pad can be inserted while excellently moving the one end of the return spring.

If the one end of the return spring opposes to the side of the friction pad opposing to the disk rotor at a distance therebetween at least when the friction pad is inserted, it becomes easy to insert the friction pad.

If the one end of the return spring slides on the angle portion which is the peripheral edge of the friction pad on the side opposing to the disk rotor when the friction pad is inserted, a returning force in the axial direction of the disk and a pressing force in the circumferential direction of the disk can be provided on the friction pad.

The one end of the return spring is disposed in the projection space of the opening of the caliper, and the sliding surface of the disk rotor opposing portion of the friction pad inserted into the caliper from outside in the radial direction of the disk rotor slides, and thus, it is easy to insert the friction pad.

Since the space is formed in the caliper at a location of the intermediate portion between the one end and the other end of the return spring, deformation of the intermediate portion can be allowed.

The one end of the return spring is disposed at the intermediate portion in the disk rotor radial direction of the portion which receives the braking torque of the friction pad. Therefore, it is unnecessary to deform the return spring more than necessary and the return spring does not interfere when the friction pad is inserted in between the one end and the surface of the caliper opposing to the one end from outside in the radial direction of the disk. Thus, sufficient force returning the friction pad in the axial direction of the disk is provided without necessity or setting the spring constant of the return spring to a small value, which makes it easy to insert the friction pad, and improves assembling operability.

The one end of the return spring is disposed closer to the piston than the pad guide surface in the pad insertion space, and the friction pad is inserted in between the one end of the return spring and the piston projecting surface. Therefore, it is easy to insert the friction pad.

Since the S-shaped bent portion is formed on the return spring at the intermediate portion between the one end and the other end, thereby generating sufficient returning force.

Since the other end of the return spring is fixed to the caliper by the bolt, it is easy to attach and detach the return spring, and it is possible to reliably fix the return spring to the caliper.

Since the pad guide extending in the direction intersecting with the surface of the disk rotor is formed on the end of the friction pad abutting surface of the one end of the return spring in the radial direction of the disk rotor, the friction pad is smoothly introduced and position when it is inserted, and the assembling operability of the friction pad is largely enhanced.

Since the pad guide is a flat surface portion extending straightly in the direction intersecting with the surface of the disk rotor, the pad guide can be easily formed.

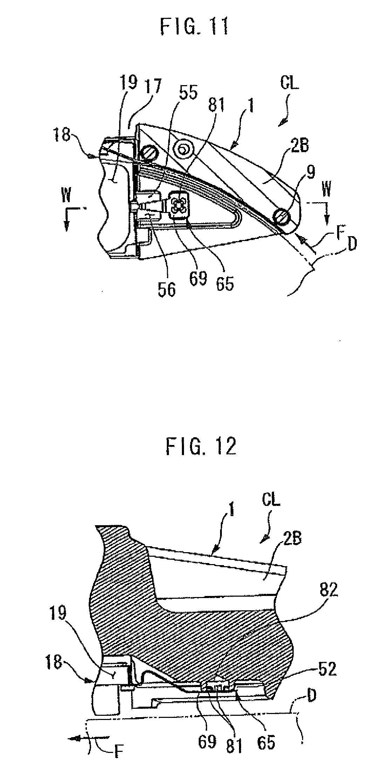

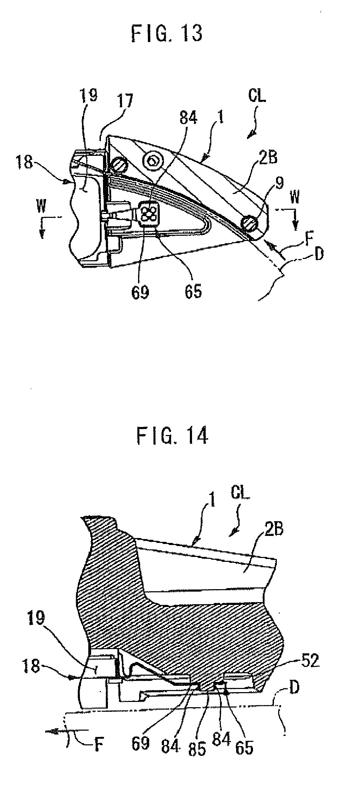

(Second Embodiment) Next, a second embodiment will be described referring to Figs. 11 to 14. Fig. 11 is a partial sectional view showing a disk brake of the second embodiment of the present invention. Fig. 12 is a partial enlarged plan sectional view taken along the line W-W in Fig. 11, showing the disk brake. Fig. 13 is a partial sectional view showing a modification of the disk brake of the second embodiment of the invention. Fig. 14 is a partial enlarged plan sectional view taken along the line W-W in Fig. 13, showing the modification. The same names, the same reference numerals and symbols will be designated to the same members as those of the first embodiment.

As shown in Figs. 11 and 12 showing the outer side only, the second embodiment is different from the first embodiment in the mounting structure of the return spring 65 on the caliper CL. That is, a plurality of engaging pawls (engaging portions) 81 are formed on the base plate 69 of the return spring 65. The engaging pawls 81 project in a form of a curved shape from the intermediate portion to the same side. Tip ends of the engaging pawls 81 are radially bent to directions opposite from the center of the base plate 69. On the other hand, on the projecting stage 52 of the caliper CL, straight engaging holes 82 rather than the screw holes are formed. All of the engaging pawls 81 are equally elastically deformed to engage with the engaging holes 82, thereby fixing the return spring 65 to the caliper CL.

According to the disk brake of the second embodiment, since the base plate 69 of the return spring 65 is fixed to the caliper CL by the elastic force of the plurality of engaging pawls 81 formed on the base plate 69, the number of parts can be reduced as compared with a case where the base plate 69 is fixed by bolts.

The second embodiment can be modified as shown in Figs. 13 and 14. That is, a plurality of engaging pieces (engaging portion) 84 which project in a form of a curved shape on the base plate 69 of the return spring 65 at the intermediate portion thereof. Each of the engaging pieces 84 is bent such that an intermediate portion of an extending portion thereof is closest to the central portion of the base plate 69. On the other hand, columnar portions 85 rather than the screw holes are formed on the projecting stage 52 of the caliper CI. All of the engaging pieces 84 are equally elastically deformed so that each of the columnar portions 85 is engaged between the engaging pieces 84, thereby fixing the return spring 65 to the caliper CL.

In this case also, since a bolt is not required, the number of parts can be reduced.

Details of the second embodiment have been described. The effects of the second embodiment will be described below.

Since the other end of the return spring is fixed to the caliper by the engaging portion formed on the other end, the number of parts can be reduced.

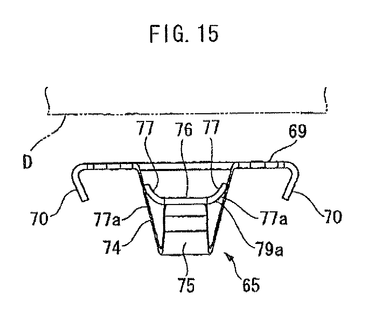

(Third Embodiment) Next, a third embodiment will be described referring to Fig. 15. Fig. 15 is an enlarged view of an essential portion of a return spring of a disk brake of the third embodiment according to the present invention. The same names, the same reference numerals and symbols will be designated to the same members as those of the first embodiment.

The third embodiment is different from the first embodiment in the shapes of the guide plates 77 and 77 of the return spring 65. That is, a pair of guide plates 77 and 77 incline and extend from both side edges of the tip end plate 76 of the return spring 65 in the opposite direction from the latch piece 70 such that tip ends of the guide plates 77 and 77 are more separated. The guide plates 77 and 77 have cylindrical surface shapes having centers between the guide plates 77 and 77. With this, out of abutting surfaces 79a formed by the tip end plate 76 and the of the pair of guide plates 77 and 77, the pad guide surface 77a formed by the guide plate 77 on the end in the radial direction of the disk rotor is formed in a curved portion extending in a direction intersecting with the surface of the disk rotor D in the form of an arc.

According to the disk brake of the third embodiment, since the pad guide surface 77a is the curved surface extending in the direction intersecting with the surface of the disk rotor D in the form of the arc, it is possible to smoothly insert the friction pad which is guided by the pad guide surface 77a.

Details of the third embodiment have been described above. The effect of the third embodiment will be described below.

Since the pad guide is the curved surface extending in the direction intersecting with the surface of the disk rotor in the form of the are, it is possible to smoothly insert the friction pad which is guided by the pad guide.

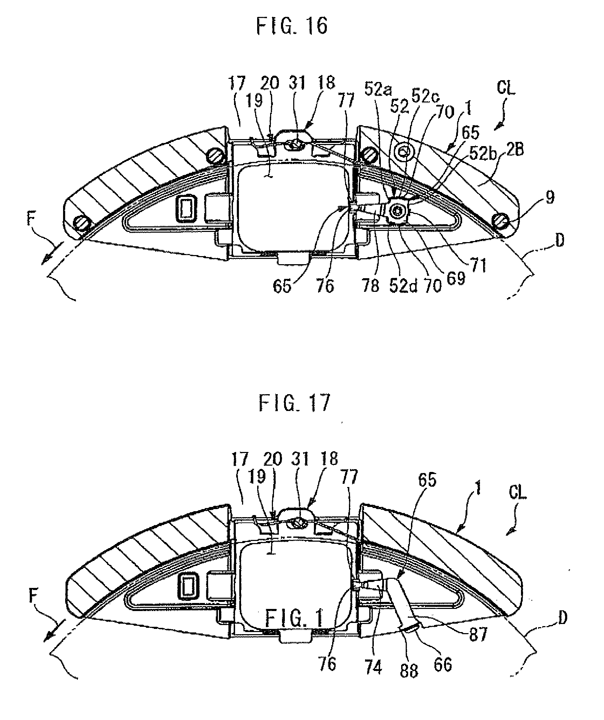

(Fourth Embodiment) Next, a fourth embodiment will be described referring to Fig. 16. Fig. 16 is a sectional view showing a disk brake of the fourth embodiment according to the present invention. The same names, the same reference numerals and symbols will be designated to the same members as those of the first embodiment.

In the fourth embodiment, although the position of the tip end plate 76 of the return spring 65 is the same as that of the first embodiment, the position of the projecting stage 52 on the base plate 69, where the base plate 69 is mounted on the caliper CL, is offset inward in the radial direction of the disk. Along with such configuration, the wall surfaces 52a and 52b of the projecting stage 52 on the side of the pad insertion space 19 and on the opposite side from the pad insertion space 19 extend in a direction orthogonal to a diagonal direction connecting the tip end plate 76 and the bolt 66 with each other, and the wall surfaces 52c and 52d on the outer and inner sides in the radial direction of the disk extend in a direction orthogonal to the wall surfaces 52a and 52b.

(Fifth Embodiment) Next, a fifth embodiment will be described referring to Fig. 17. Fig. 17 is a sectional view showing a disk brake of the fifth embodiment according to the present invention. The same names, the same reference numerals and symbols will be designated to the same members as those of the first embodiment.

In the fifth embodiment, unlike the first embodiment, the caliper body 1 is not formed by connecting the inner caliper half and the outer caliper half with each other by the tie bolt, and the caliper body 1 is a so-called mono-block in which the inner side and outer side are integrally formed as one piece.

Accordingly, it becomes difficult to mount the return spring 65 on the caliper body 1 on a position opposing to the disk rotor D. Therefore, in the fifth embodiment, an extending plate 87 which is bent at the base end of the inclined plate 74 and extends inward in the radial direction of the disk, and a mounting plate 88 extending from the tip end of the extending plate 87 at right angles are formed instead of the base plate of the return spring 65, then the return spring 65 is fixed to a surface of the caliper body 1 facing the inner side of the radial direction of the disk at the position of the mounting plate 88 by a bolt 66.

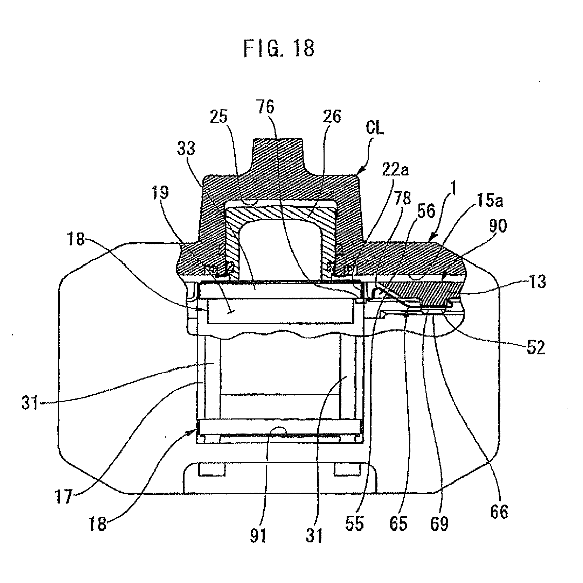

(Sixth Embodiment) Next, a sixth embodiment will be described referring to Fig. 18. Fig. 18 is a partially sectional plan view showing a disk brake of the sixth embodiment according to the present invention. The same names, the same reference numerals and symbols will be designated to the same members as those of the first embodiment.

A disk brake of the sixth embodiment includes a carrier 90 fixed to a non-rotatablo portion of a vehicle, and a caliper body 1 supported on the carrier slidably in the axial direction of the disk. The caliper CL is a frame-type single bore caliper, in which a bore 25 and a piston 26 are provided only on the inner side thereof, and a pressing surface 91 of the caliper body 1 opposing to the piston 26 is disposed on the outer side thereof.

An opening 17 through which the friction pad 18 is inserted is formed in the caliper body 1 such as to penetrate the caliper body 1 in the radial direction of the disk. The pair of friction pads 18 and 18 are inserted from the openings 17 into the pad insertion spaces 19 of the caliper body 1 whose upper end is formed by the opening 17, and the friction pads 18 and 18 are supported by two pad pins 31 extending across the opening 17 movably in the axial direction of the disk.

The return spring 65 of the first embodiment, which generates a returning force for the inner friction pad 18, is provided on the carrier 90. That is, a projecting stage 52 and a groove 55 like those of the first embodiment are formed on the carrier 90 at the disk rotation-in side during forward braking. The base plate 69 of the return spring 65 is fixed to the projecting stage 52 by the bolt 66 with the bent portion 78 thereof disposed in the space 56 in the groove 55.

In the mount state on the carrier 90, the return spring 65 is disposed with its S-shaped bent portion 78 placed in the space 56 of the groove 55 formed at this position of the caliper body 1. A tip end plate 76 of the return spring 65 projects beyond a backward side torque receiving surface 22a and enters the pad insertion space 19. In other words, the tip end plate 76 is disposed in the projection space of the opening 17 of the caliper CL. The tip end plate 76 is generally in parallel to the bore forming surface 15a and opposes thereto. The tip end plate 76 is disposed at the intermediate position of the torque receiving portion 13 of the carrier 90 which receives a braking torque of the friction pad 18 in the radial direction of the disk rotor. The tip end plate 76 of the return spring 65 is disposed closer to the piston 26 than the torque receiving surface 22a in the circumferential direction of the disk.

When the friction pad 18 is mounted, in the outer side for example, the friction pad 18 is inserted into the carrier 90, on which the return spring 65 is mounted, through the opening 17 of the caliper CL from outer side in the radial direction of the disk. At that time, the back plate 33 of the friction pad 18 is inserted in between the tip end plate 76 of the return spring 65 and the bore forming surface 15a of the caliper CL opposing to the tip end plate 76, more specifically in between the tip end plate 76 of the return spring 65 and the piston 26 projecting from the bore forming surface 15a.

## Claims

1. A disk brake comprising: a pair of friction pads disposed to oppose to both surfaces of a disk rotor respectively, and a caliper having a pad insertion space into which the friction pads can be inserted from radially outside of the disk rotor and a pressing means pressing the friction pads toward the disk rotor, **characterized in that**
at least one of the pair of friction pads is provided with a return spring whose one end abuts against a side of the friction pad opposing to the disk rotor to urge the friction pad to separate from the disk rotor in its axial direction,
the one end of the return spring is disposed on the friction pad at intermediate portion in a radial direction of the disk rotor in the pad insertion space of the caliper, and
the friction pad is inserted in between the one end of the return spring and a surface of the caliper opposing to the one end.

2. The disk brake according to claim 1, wherein another end of the return spring is provided on the caliper.

3. The disk brake according to claim 2, wherein
the another end of the return spring is fixed to a surface of the caliper opposing to the one end.

4. The disk brake according to claim 3, wherein the another end of the return spring is fixed to the caliper by a bolt.

5. The disk brake according to claim 3, wherein the another end of the return spring is fixed to the caliper by an engaging portion formed on the another end.

6. The disk brake according to claim 1, wherein the caliper includes a pad guide portion which slidably guides the friction pad inserted to the caliper in the axial direction of the disk rotor, and the another end of the return spring is provided on the pad guide portion.

7. The disk brake according to claim 1, wherein the intermediate portion of the disk rotor in the radial direction where the one end of the return spring is disposed is positioned more inward than an outer periphery of the disk rotor.

8. The disk brake according to any one of claims 1 to 7, wherein the one end of the return spring is located in a range of the radial direction of the disk rotor where a torque receiving surface of the caliper, which receives a braking torque of the friction pad, exists.

9. The disk brake according to any one of claims 1 to 7, wherein the one end of the return spring slides on a side of the friction pad opposing to the disk rotor when the friction pad is inserted.

10. The disk brake according to claim 9, wherein the disk rotor opposing portion of the back plate of the friction pad includes a sliding surface on which the one end of the return spring can slide when the friction pad is inserted into the caliper from radially outside of the disk rotor.

11. The disk brake according to any one of claims 1 to 7, wherein the one end of the return spring opposes to a side of the friction pad opposing to the disk rotor with a gap therebetween when the friction pad is inserted.

12. The disk brake according to any one of claims 1 to 7, wherein the one end of the return spring slides on an angle portion which is a peripheral edge of the friction pad on a side opposing to the disk rotor when the friction pad is inserted.

13. The disk brake according to any one of claims 1 to 12, wherein a pad guide extending in a direction intersecting with the surface of the disk rotor is formed on an friction pad abutting surface of the one end of the return spring at an end in a radial direction of the disk rotor.

14. The disk brake according to any one of claims 1 to 7, wherein the caliper has a space at an intermediate portion between the one end and the another end of the return spring.

15. The disk brake according to claim 14, wherein the intermediate portion of the return spring has a bent portion which is bent at its plurality of locations and which is disposed in the space.
